# EUROPEAN PATENT APPLICATION

(11) **EP 2 644 482 A2**
(43) Date of publication of application: **02.10.2013**
(21) Application number: 13161852.2
(22) Date of filing: 29.03.2013
(51) Int. Cl.: B62J 1/00

(54) **Bicycle saddle**

(30) Priority: 29.03.2012 TW 101205698
(71) Applicant: Tien Chang Enterprise Co., Ltd, New Taipei City 22072 (TW)
(72) Inventor: Tseng, Shih - Yuan, New Taipei city 244 (TW)
(74) Representative: Chevalier, Renaud Philippe

(57) **Abstract**

The Structure of a Flying Wing-shaped Seat (2), which comprises of a Seat, is integrally formed by a plate body with a U-shaped Cross-section, said U-shaped Cross-sectional part is Diversion Trough with diversion ability, along with Butterfly Wings (2b) are symmetrically extended from the left and right end of said Diversion Trough respectively, which formed a seating position for the rider's buttocks to sit on; and a Bow (1), which is formed by a bent rod, comprises of a Fixing Part (1a), a Buffering Part (1b) and a Supporting Part (1c), said Fixing Part is formed by 2 rods disposed respectively on parallel, and fixed on the seat pillar post of the bicycle, said Buffering Part is formed by 2 rods extending parallel from the 2 front ends of said Fixing Part, said Supporting Part is formed by 2 rods which are extended outwardly, diagonally and symmetrically from the 2 back ends of said Fixing Part.

## Description

### FIELD OF THE INVENTION

The present invention involves a flying wing-shaped seat structure, particularly to a flying wing-shaped seat structure used on a Bicycle or an Electric Bicycle.

### BACKGROUND OF THE INVENTION

The Bicycle has gained popularity in recent years for not only its convenience, but for also being Eco-friendly. It is now an indispensable part of the modem man's daily life for either transportation or recreation.

The present bicycle is usually equipped with a streamlined seat. This structure however, is not only small but also with a smaller front end, which can cause pain in the crotch if being sat on for too long, as well as causing serious damage to the organs and nerves around the perineum.

Also, the seat's traditional structure is a hard type with either a flexible sponge or a foam structure built inside the sitting pad. While this can prevent serious friction when riding, it still has little effect on shock absorbing, which, while riding on bumpy roads, can cause serious damage to the buttocks, the ischium, and the spine, resulting in certain sports injuries.

### SUMMARY OF THE INVENTION

The aforementioned bicycle seat has a smaller front end, along with a hard sitting pad that has little effect on shock absorbing, as well as no thermolysis nor ventilating effect, which can cause perineum pressure, buttock damage, riding discomfort, and worse, sports injuries, while cycling.

In response, how to provide a bicycle seat that can resolve the aforementioned problems as well as provide a comfortable riding effect for the rider has become the main problem this present invention is to improve.

The present invention involves a flying wing-shaped seat structure for the use of a Bicycle or an Electric Bicycle, which comprises of a Seat, is integrally formed by a plate body with a U-shaped Cross-section, said U-shaped Cross-sectional part is a Diversion Trough with a diversion ability, along with Butterfly Wings are symmetrically extended from the left and right end of said Diversion Trough respectively, which formed a seating position for the rider's buttocks to sit on; and a Bow, which is formed by a bent rod, comprises of a Fixing Part, a Buffering Part and a Supporting Part, said Fixing Part is formed by 2 rods disposed respectively on parallel, and fixed on the seat pillar post of the bicycle, said Buffering Part is formed by 2 rods extending parallel from the 2 front ends of said Fixing Part, said Supporting Part is formed by 2 rods which are extended outwardly, diagonally and symmetrically from the 2 back ends of said Fixing Part.

### BRIEF DESCIPTION OF DRAWINGS

Fig.1: A 3-Dimensional external view of the present invention.
Fig.2: A 3-Dimensional exploded view of the present invention.
Fig.3: A front view of the present invention.
Fig.4: A right side view of the present invention.
Fig.5: A top view of the present invention.
Fig.6: An scheme of the practicing of the present invention with a bicycle.

### DETAILED DESCRIPTION OF PREFERRED EMBODIMENT

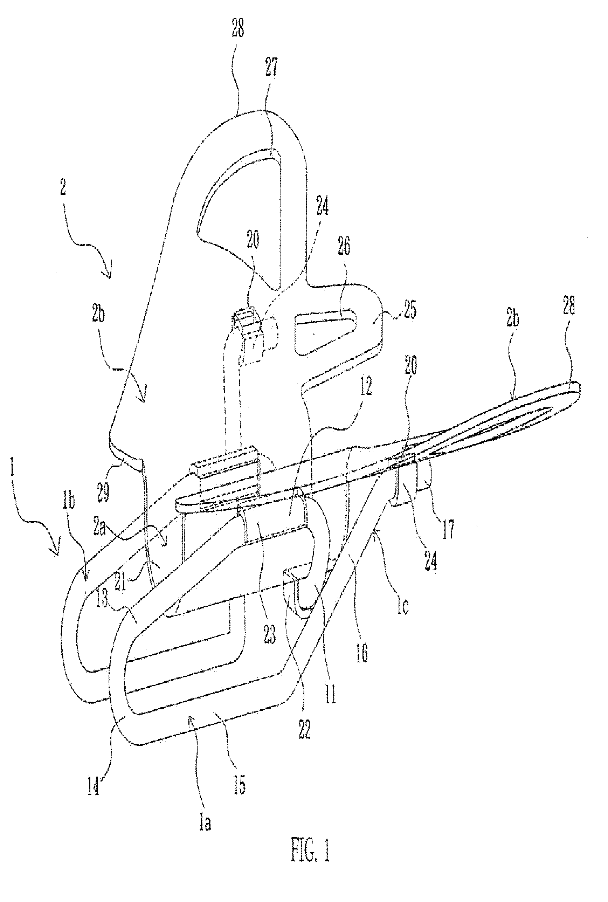

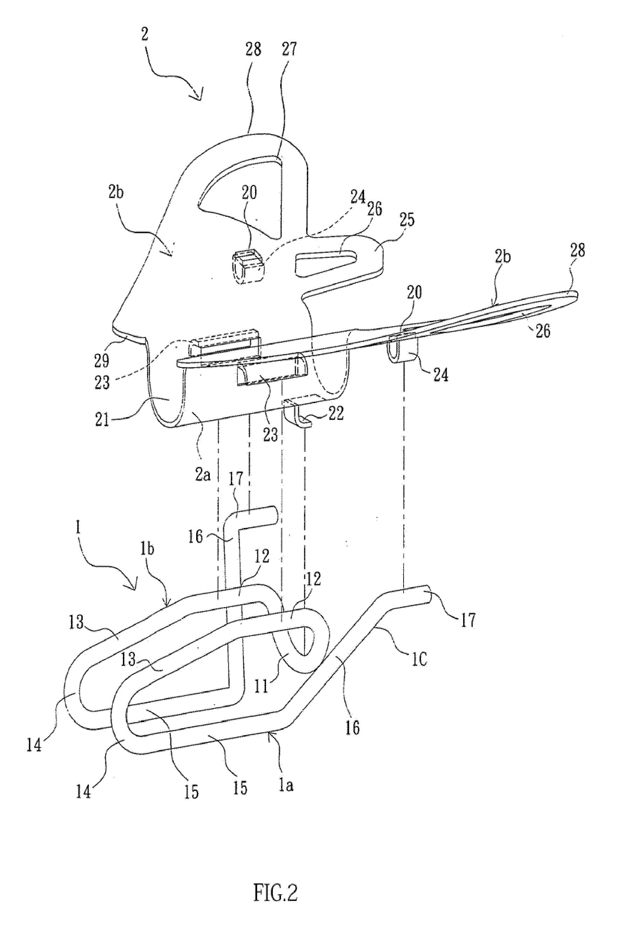

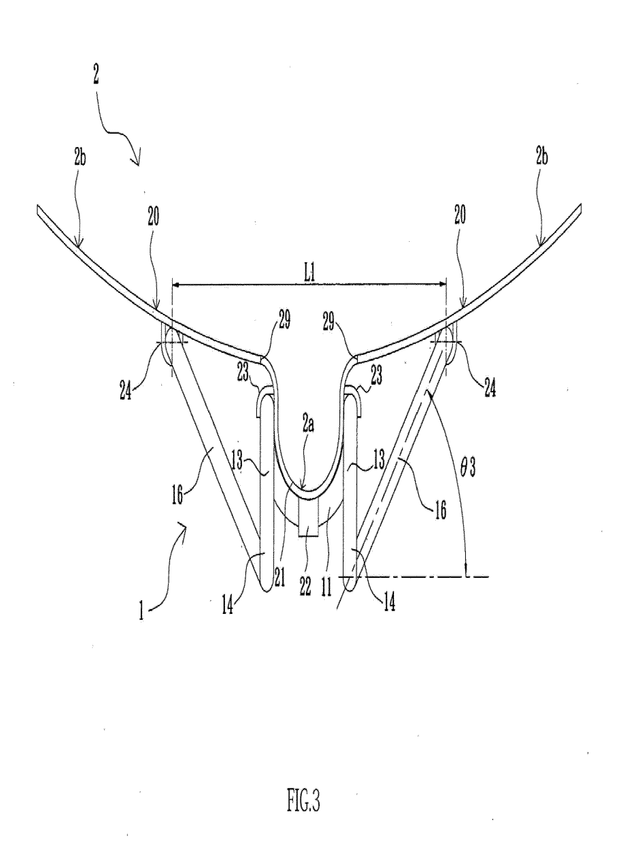

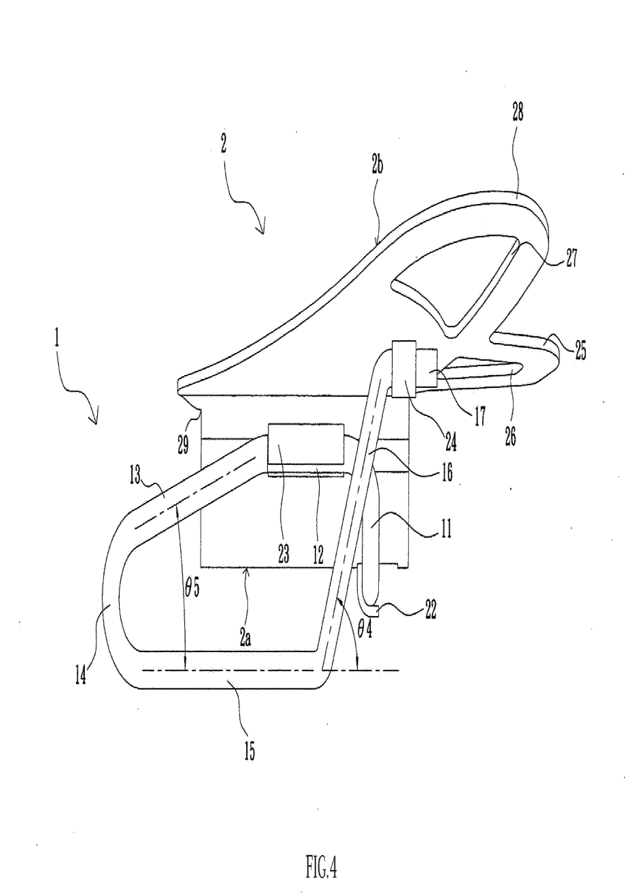

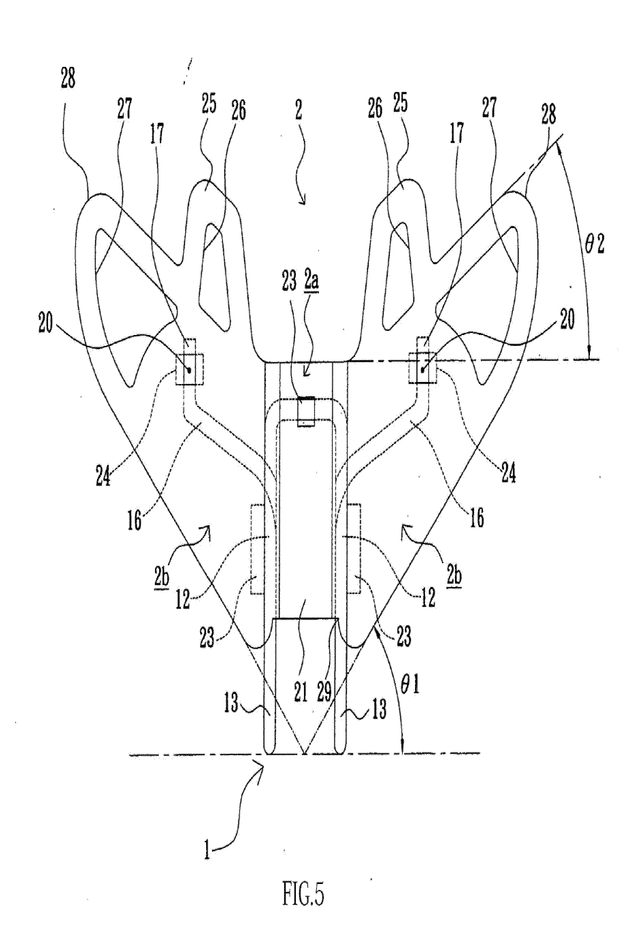

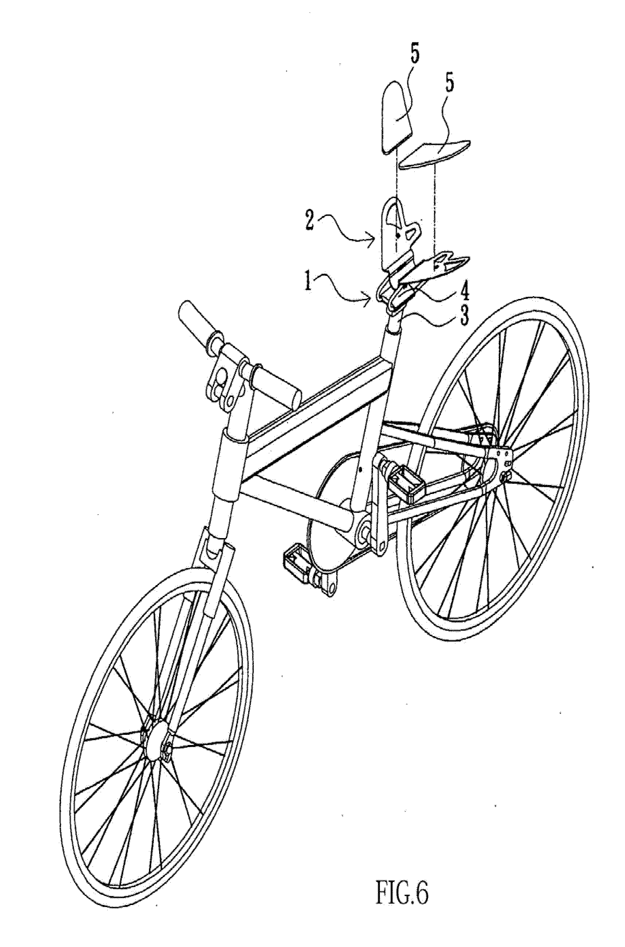

The Detailed Description of the Preferred Embodiment of the present invention are as shown in the following drawings: Fig.1 as a 3-D diagram of the present invention, Fig.2 as a 3-D dissection diagram of the present invention, Fig.3 as a front view of the present invention, Fig.4 as a right side view of the present invention, Fig.5 as a top view of the present invention, and Fig.6 as an operating principle diagram for showing the practicing of the present invention.

As shown in Fig.1 & Fig.2, the drawings reveal a structure of a Flying Wing-shaped Seat, which comprises of:
A Seat (2), which is integrally formed by a plate body with a U-shaped Cross-section, said U-shaped Cross-sectional part is a Diversion Trough (2a) with diversion abilities, along with two Butterfly Wings (2b) that are symmetrically extended from the left and right end of said Diversion Trough (2a) respectively, which formed a seating position for the rider's buttocks to sit on;
A Bow (1), which is formed by a bent rod and comprises of 3 parts - The first part is a Fixing Part (1a) that is formed by 2 rods disposed respectively on parallel, and fixed on the Bicycle seat's Pillar Post (3). The second part is a Buffering Part (1b) which is flexible for buffering the gravity generated by the rider, that are formed by the 2 rods extended parallel from the 2 front ends of said Fixing Part (1a) and connected in the back end, and the third part is the Supporting Part (1c) which is formed by 2 rods which are extended outwardly, diagonally and symmetrically from the 2 back ends of said Fixing Part (1a). Said Supporting Part (1c) also has flexibility and supporting abilities.

Said Diversion Trough (2a), is placed on the top of said Buffering Part (1b), as said Butterfly Wings (2b) are fixed on the top of the Buffering Part (1b) and the Supporting Part (1c), thus, with the support of said Bow (1), said Seat (2) can produce excellent flexibility and supporting abilities to reduce shock and protect the rider's safety, even when riding on bumpy roads

Said Seat's (2) Diversion Trough (2a), as the Gushing Groove (21), is placed under the human's perineum (including the Groin, the Prostate, and the Anus). When the bicycle is moving, said Gushing Groove (21) allows the air to flow smoothly from front to back, accomplishing its air flowing ability. This can also prevent the rider's groin from feeling hot and unbearable, as well as preventing the rider's weight from crushing his perineum and avoiding friction with the Seat (2).

Said left and right back edges of said Butterfly Wings' (2b) comprises of protruding-shaped Tail Wings (25) for supporting the rider's buttocks. Said Tail Wings (25) not only expands the area of the Seat (2), but also sticks to the buttocks' rear part. This provides the rider with a comfortable and smooth ride, along with a sense of futuristic and streamlined visual design effect.

Said Seat (2) is integrally formed by a plate body, with the material being either metal, plastic steel or flexible fiber. Said Bow (1) is formed by the bending of a Three-dimensional wire bending machine. Because they are integrally formed and easy to assemble, thus, the present invention fits the request of standardization and mass-production, providing economic benefits.

Also, the left and right edges of said Butterfly Wings (2b) comprises of Hollow-carved Holes (26) (27) with air permeability. One of the Hollow-carved Holes (26) can be drilled on said Tail Wing (25), while the other Hollow-carved Hole (27) can be drilled on the end edge of each said Butterfly Wing (2b). Said Hollow-carved Holes can be drilled on more than two without restricted sizes. As shown in the whole drawings, the two Hollow-carved Holes (26) (27) are simply 2 large holes. As for small holes, the more holes are drilled, the permeability is better.

As shown in Fig.3, said Seat (2), as viewing from the front, shows that the left and right of the two said Butterfly Wings (2b) are extended outwards and upwards with a slight bend from the left and right of the Diversion Trough (2a). This slightly arcuate shape also matches the arcuate shape of the human's buttocks, matching the design of Ergonomics.

As shown in Fig.5, viewing from the top, the said two left and right Butterfly Wings (2b) are two Delta wings that are tilted backwards, with the front edges and back edges of said Delta wings swept backwards, and the shape of the free end is a Circular End (28) with a circular angle. Therefore, no injuries will occur upon touching the Circular End (28). The Included Angle (θ1) between the Delta wing's front edge and the horizon is 45 degrees, while the Included Angle (θ2) between the Delta wing's back edge and the horizon is 45 degrees. The two aforementioned Included Angles (θ1 & θ2) are not quite restricted, as they have a changeable angle at around 10 degrees plus or minus. However, no matter what the changes are, the said two left and right Butterfly Wings (2b) both shrink gradually towards the free ends, and they remain Delta wings that are tilted backwards. Through this arrangement, the rider can face neither interruption nor jamming during the movements of their legs while cycling.

Also, as shown in Fig.2 & Fig.5, a Concave Gap (29) is formed on the front end of the Seat's (2) left and right Butterfly Wings (2b), with its most concaved point positioned above the front edge opening of said Diversion Trough (2a), which is also where the left and right Butterfly Wings (2b) connect with it. When a male rider sits on said Seat (2), the Gap (29) happens to be under the male rider's reproductive organs, which can prevent a friction with said Seat (2) while cycling, as well as maintaining that area's ventilating and cooling effect.

Secondly, as shown in Fig.2, said Bow's (1) Fixing Part (1a) of the Bow (1) is formed by two Parallel Straight Rods (15), said Buffering Part (1b) of the Bow (1) is formed by a Half-circular Rod (11), two Horizontal Rods (12) that are both parallel to and vertically connected with the two ends of said Half-circular Rod (11), two Parallel Tilting Rods (13) that tilt downwards and connect with the tails of said Horizontal Rods (12), and two Parallel and Circular Rods (14) that connect with the tails of said Tilting Rods (13). The back ends of said two Circular Rods (14) are connected with the front ends of said two Parallel Straight Rods (15), Said Buffering Part (1b) is like a bow structure, as it holds the weight of both the Seat (2) and the rider through the Horizontal Rods (12) and produces flexible and buffering effects through the Tilting Rods (13) and Circular Rods (14).Thus, the Seat (2), when feeling weight pressure, can produce buffering effects with the support of the Bow (1).

The two upper edges of said Diversion Trough (2a) are clamped by said Horizontal Rods (12), and the bottom rear end of said Diversion Trough (2a) has an L-shaped Hook (22) that can hook up with said Half-circular Rods (11) to prevent said Seat (2) from moving backwards.

Also, a Stress Point (20) is placed on each of the left and right Butterfly Wings (2b), with the Straight Length (L1) between said Stress Points (20) representing the distance between the buttocks when the best sitting comfort for the rider is achieved. The ideal length of said Straight Length (L1) is between 12∼16 cm, depending on the rider being an adult or a child. For an adult, the longer the Straight Length (L1) is the better. For a child, the shorter the Straight Length (L1) is the better. One unchangeable thing is that the best length being set as 14 cm. Also, 2 Circular-shaped Lugs (24) are disposed under the position of the left and right stress points (20) of said Butterfly Wings (2b). The capabilities of said Circular-shaped Lugs (24) can be described through the following explanation.

The Fixing Part (1a) of said Bow (1) are two parallel Straight Rods (15), and said Supporting Part (1c) is formed by two Expansion Rods (16) that are extended outwardly, diagonally and symmetrically from the 2 back ends of said parallel Straight Rods (15), and two parallel Insertion Rods (17) connected to the back ends of said Expansion Rods (16), and the positions of said Insertion Rods (17) are higher than the two Horizontal Rods (12) of said Buffering Part (1b), said Insertion Rods (17) are placed inside said Circular-shaped Lugs (24) to prevent said Seat (2) from moving forwards.

In addition, two positioning-use Opposite L -shaped Clamps (23) are disposed on the outer-walls of said U -shaped Diversion Trough (2a) and below the left and right Butterfly Wings (2b), said Opposite L -shaped Clamps (23) are applied for clamping said two Horizontal Rods (12) separately to prevent said Seat (2) from moving sideways.

Said Seat (2) and Bow (1) are solidly fixed effect through three fixing relationships - The Hook (22) and the Half-Circular Rods (11), the Clamps (23) and the Horizontal Rods (12), the Lugs (24) and the Insertion Rods (17). These three fixing relationships ensure that the Seat (2) would not move from the Bow (1) in either direction, achieving a sturdy fixed relationship. Also, the Seat (2) and Bow (1), through these three fixing structures, can be quickly assembled in a working environment without extra tools and fixing components, thus, present invention benefits from effectiveness of instant- assembling and time-saving.

As shown in Fig.3 & Fig.4, said Expansion Rods (16) has a side Included Angle (θ3) formed by outward tilting, the ideal angle for said side Included Angle (θ3) is 45 degrees. Said Expansion Rods (16) also has a backward Included Angle (θ4) from the horizon due to backward tilting, and the ideal angle for said backward Included Angle (θ4) is 60 degrees. Through these two said Included Angles, the two Expansion Rods (16) can produce effective buffering effects after receiving pressure from the Seat (2).

From the aforementioned, if the side Included Angle (θ3)'s angle is more than 60 degrees from the horizon, the two Expansion Rods (16) would rise upward towards a Straight Angle, raising the height of the two left and right Butterfly Wings (2b) and decreasing the sitting area, making the rider feels uncomfortable when sitting due to concentrated stress area on buttocks. In the other hand, if the angle of side Included Angle (θ3) is lower than 30 degrees from the horizon, the two Expansion Rods (16) would approach Horizontal, lowering the height of the two left and right Butterfly Wings (2b) and decreasing the buffering effects considerably. Hence, as aforementioned, 45 degrees or an angle close to it would serve as the ideal angle for the side Included Angle (θ3).

From the aforementioned, if the backward Included Angle (θ4)'s angle is more than 70 degrees from the horizon, this would make the height of the two left and right Butterfly Wings' (2b) back higher than the front, causing to Seat (2) to tilt forward, making the rider feels uncomfortable due to the barycenter tilts forward. In the other hand, if the angle of the backward Included Angle (θ4) is lower than 50 degrees from the horizon, the two Expansion Rods (16) would tilt downwards, making the height of the two left and right Butterfly Wings' (2b) back lower than the front, causing the Seat (2) to recline and making the rider's barycenter recline, therefore, the rider is hardly staying stable when riding and bringing him close to danger. Hence, as aforementioned, 60 degrees or an angle close to it would serve as the ideal angle for the backward Included Angle (θ4).

As mentioned above, the ideal angle for the Included Angle (θ5) between the Parallel and Straight Rod (15) at one end of said Circular Rod (14) and the Tilting Rod (13) at said Circular Rod's (14) other end would be near 30 degrees. When said angle is more than 45 degrees, the front of said two Butterfly Wings (2b) would be higher than the back, resulting in the Seat's (2) recline and the Bow (1) unable to produce its buffering effects efficiently. In the other hand, if said angle is less than 20 degrees, the front of said two Butterfly Wings (2b) would be lower than the back, causing the Seat (2) to plunge as well as the buffering effects to be insufficient. Therefore, as aforementioned, 30 degrees or an angle close to it would serve as the ideal angle for the Included Angle (θ5).

From the aforementioned, after comparing the heights of the Bow's (1) Buffering Part (1b) and Supporting Part (1c) the shock force can be absorbed and reduced by the Bow (1) when riding on bumpy roads, brining the shock factor to less than 1 and considerably decreasing the force taken by the buttocks.

Referring to Fig.6 again, said Bow's (1) Fixing Part (1a) is fixed on the Bicycle's Seat Pillar Part (3) by a Fixing Clamp (4) along with other Fixing Components (undisclosed, as they are from older types). Also, said Seat's (2) surface is combined with a Sitting Pad (5) that has either flexibility or buffering abilities. Said Sitting Pad (5) can be one or complex laminated as the following: A Sponge Pad, a Styrofoam Pad, a Foam Pad, a Latex Pad, a Flexible PU Pad, a Flexible PVC Pad, a Flexible Silica Gel Pad, a Flexible Air Pad, a Flexible Skid-proof Pad, or any other Sitting Pad that has similar qualities. Said Sitting Pad can be made by one layer or laminated by several layers of said pads. The Sitting Pad (5) can produce the effects of skid-proof, buffering and flexibility.

The above description with drawings is the best but not only embodiment of present invention, the modifications and variations according to the scope of present invention may comprise features claimed hereafter.

## Claims

1. The Structure of a Flying Wing-shaped Seat, which comprises of:
A Seat (2), which is integrally formed by a plate body with a U-shaped Cross-section, said U-shaped Cross-sectional part is a Diversion Trough (2a) with diversion abilities, along with two Butterfly Wings (2b) that are symmetrically extended from the left and right end of said Diversion Trough (2a) respectively, which formed a seating position for the rider's buttocks to sit on;
A Bow (1), which is formed by a bent rod, comprises of 3 parts, the first part is a Fixing Part (1a) that is formed by 2 rods disposed respectively on parallel, and fixed on the seat pillar post of the bicycle, the second part is a Buffering Part (1b) which is flexible for buffering the gravity generated by the rider, that are formed by the 2 rods extended parallel from the 2 front ends of said Fixing Part (1a) and connected in the back end, and the third part is the Supporting Part (1c) which is formed by 2 rods which are extended outwardly, diagonally and symmetrically from the 2 back ends of said Fixing Part (1a). Said Supporting Part (1c) also has flexibility and supporting abilities.
Said Diversion Trough (2a), as the Gushing Groove (21), is placed on the top of said Buffering Part (1b), as said Butterfly Wings (2b) are fixed on the top of the Buffering Part (1b) and the Supporting Part (1c), thus, with the support of said Bow (1), said Seat (2) can produce excellent flexibility and supporting abilities.

2. The Flying Wing-shaped Seat Structure, as described in Claim 1, is **characterized in that**:
Said Seat (2), as viewing from the front, shows that the left and right of the two said Butterfly Wings (2b) are extended outwards and upwards with a slight bend from the left and right of the Diversion Trough (2a). Viewing from the top, the left and right of the two said Butterfly Wings (2b) are two Delta wings that are tilted backwards, with the front edges and back edges of said Delta wings swept backwards, and the shape of the free end is a Circular Arc (28) with a specific angle.

3. The Flying Wing-shaped Seat Structure, as described in Claim 2, is **characterized in that**:
Said left and right back edges of said Butterfly Wings' (2b) comprises of protruding-shaped Tail Wings (25) for supporting the rider's buttocks.

4. The Flying Wing-shaped Seat Structure, as described in Claim 2, is **characterized in that**:
The left and right edges of said Butterfly Wings (2b) comprises of hollow-carved holes with air permeability.

5. The Flying Wing-shaped Seat Structure, as described in Claim 1, is **characterized in that** :
Said (1) Fixing Part (1a) of the Bow (1) is formed by two parallel Straight Rods (15), said Buffering Part (1b) of the Bow (1) is formed by a Half-circular Rod (11), two Horizontal Rods (12) that are both parallel to and vertically connected with the two ends of said Half-circular Rod (11), two Parallel and Tilting Rods (13) that tilt downwards and connect with the tails of said Horizontal Rods (12), and two Parallel and Circular Rods (14) that connect with the tails of said Tilting Rods (13).; the back ends of said two Circular Rods (14) are connected with the front ends of said two Parallel Straight Rods (15), and,
The two upper edges of said Diversion Trough (2a) are clamped by said Horizontal Rods (12), and the bottom rear end of said Diversion Trough (2a) has an L-shaped Hook (22) that can hook up with said Half-circular Rods (11) to prevent said Seat (2) from moving backwards.

6. The Flying Wing-shaped Seat Structure, as described in Claim 5, is **characterized in that**:
A Stress Point (20) is placed on each of the left and right Butterfly Wings (2b), with the Straight Length (L1) between said Stress Points (20) representing the distance between the buttocks when the best sitting comfort for the rider is achieved. The ideal length of said Straight Length (L1) is 10∼15 cm, and
The Fixing Part (1a) of said Bow (1) are two parallel Straight Rods (15), and said Supporting Part (1c) is formed by two Expansion Rods (16) that are extended outwardly, diagonally and symmetrically from the 2 back ends of said parallel Straight Rods (15), and two parallel Insertion Rods (17) connected to the back ends of said Expansion Rods (16), and the positions of said Insertion Rods (17) are higher than the two Horizontal Rods (12) of said Buffering Part (1b), said Insertion Rods (17) are placed inside said Circular-shaped lugs (24) to prevent said Seat (2) from moving forwards.

7. The Flying Wing-shaped Seat Structure, as described in Claim 6, is **characterized in that**:
Two positioning-use Opposite L -shaped Clamps (23) are disposed on the outer-walls of said U -shaped Diversion Trough (2a) and below the left and right Butterfly Wings (2b), said Opposite L -shaped Clamps (23) are applied for clamping said two Horizontal Rods (12) separately to prevent said Seat (2) from moving sideways.

8. The Flying Wing-shaped Seat Structure, as described in Claim 1, is **characterized in that**:
A Concave Gap (29) is formed on the front end of the Seat's (2) left and right Butterfly Wings (2b), with its most concaved point positioned above the front edge opening of said Diversion Trough (2a).

9. The Flying Wing-shaped Seat Structure, as described in Claim 1, is **characterized in that**:
The surface of said Seat (2) consists of a Pad (4) that has either flexibility or buffering abilities, which is composed of one or several laminated layers as following:
A Sponge Pad, a Styrofoam Pad, a Foam Pad, a Latex Pad, a Flexible PU Pad, a Flexible PVC Pad, a Flexible Silica Gel Pad, a Flexible Air Pad, and a Flexible Skid-proof Pad.

10. The Flying Wing-shaped Seat Structure, as described in Claim 7, is **characterized in that**:
Said Expansion Rods (16) have an side Included Angle (θ3) from the horizon due to outward tilting, with the ideal angle for said side Included Angle (θ3) as 45 degrees. Said Expansion Rods (16) also have a backward Included Angle (θ4) from the horizon due to backward tilting, with the ideal angle for said backward Included Angle (θ4) as 60 degrees.
